# EUROPÄISCHE PATENTSCHRIFT

(11) **EP 1 529 257 B1**
(45) Veröffentlichungstag und Bekanntmachung des Hinweises auf die Patenterteilung: **24.09.2008**
(21) Anmeldenummer: 03787644.8
(22) Anmeldetag: 10.07.2003
(51) Int. Cl.: G06F 21/00, G06F 21/24

(54) **ÜBERNEHMEN EINES DATENSATZES IN EINE RECHENEINHEIT**
ACCEPTING A SET OF DATA IN A COMPUTER UNIT
PROCEDE POUR TRANSFERER AU MOINS UN ENREGISTREMENT PROVENANT D'UNE SOURCE DE DONNEES EXTERNE DANS UNE UNITE DE CALCUL ET UNITE DE CALCUL CORRESPONDANTE

(30) Priorität: 02.08.2002 DE 10235381
(43) Veröffentlichungstag der Anmeldung: 11.05.2005
(73) Patentinhaber: ROBERT BOSCH GMBH, 70442 Stuttgart (DE)
(72) Erfinder: KORNBLUM, Christian, 71701 Schwieberdingen (DE)
(86) Internationale Anmeldenummer: PCT/DE2003/002309
(87) Internationale Veröffentlichungsnummer: WO 2004/017182

(56) Entgegenhaltungen:
- EP-A- 0 706 275
- EP-A- 0 997 807
- WO-A-02/48874
- US-A- 5 421 006
- US-A- 5 844 986
- US-A- 5 956 408

## Beschreibung

### STAND DER TECHNIK

Die vorliegende Erfindung betrifft ein Verfahren zum Übernehmen wenigstens eines Datensatzes einer externen Datenquelle in eine Recheneinheit, wie es beispielsweise aus der DE 100 43 499 A1 bekannt ist, sowie eine entsprechend gestaltete Recheneinheit.

Gemäß den in der DE 100 43 499 A1 beschriebenen Verfahren wird wenigstens ein Datensatz - bei dem es sich beispielsweise um Programmcode oder im Ablauf eines Programms verwertete Informationen handeln kann, die in einem Speicher einer Recheneinheit zur weiteren Verwendung abgespeichert werden - einer Recheneinheit, wie einem Steuergerät eines Fahrzeugs übermittelt. Dabei wird der wenigstens eine Datensatz zusammen mit Zusatzinformationen, beispielsweise als zusammengehöriges Datenpaket, von der Datenquelle an die Recheneinheit übermittelt. Die Recheneinheit lädt die übermittelten Daten in einen ihr zugeordneten Zwischenspeicher ein. Anschließend nimmt die Recheneinheit insbesondere mittels Datenfernübertragung Kontakt mit einer externen Überprüfungseinheit auf, identifiziert sich bei der externen Überprüfungseinheit und übermittelt dieser zumindest einen Teil der Zusatzinformationen. Die externe Überprüfungseinheit verifiziert anhand des übermittelten Teiles der Zusatzinformationen und der Identität der Recheneinheit, ob die Verwendung des wenigstens einen Datensatzes in der Recheneinheit zulässig ist oder nicht. Entsprechend dem Ergebnis der Überprüfung wird der Recheneinheit entweder ein Freigabesignal oder ein Sperrsignal übermittelt. Im Falle der Übermittlung des Sperrsignals kommt es zu einem Löschen des wenigstens einen Datensatzes von dem Zwischenspeicher. Andernfalls wird der übermittelte wenigstens eine Datensatz in der Recheneinheit verwendet.

EP-A-0 706 275 stellt ein Verfahren nach dem Präambel des Anspruchs 1 dar.

Es ist wünschenswert, wenn in Recheneinheiten, wie Steuergeräten von Kraftfahrzeugen, dort abgelegte Datensätze extern veränderbar sind. Dies kann beispielsweise zu Zwecken des Updates solcher Steuergeräte erfolgen, wodurch ein Austausch des Steuergerätes vermieden wird. Die Übertragung von Datensätzen zur Recheneinheit kann dabei durch Datenfernübertragung oder über eine entsprechende mit der Recheneinheit verbundene Schnittstelle, wie einer Diagnoseschnittstelle eines Kraftfahrzeugs, erfolgen. Die Datensätze werden auf einer Datenquelle bereitgestellt, wobei es sich bei der Datenquelle sowohl um Datenspeicher als auch um Datenverarbeitungsgeräte handeln kann.

Dabei soll zum Einen sichergestellt werden, dass nur Datensätze an die Recheneinheit übertragen und von dieser verwendet werden, die autorisiert sind. Eine unzulässige Veränderung der Datensätze oder ein Aufspielen nicht freigegebener Datensätze soll verhindert werden, da die Verwendung nicht freigegebener Datensätze zu Störungen im Betrieb der Recheneinheit oder mit der Recheneinheit verbundener weiterer Recheneinheiten führen kann. Andererseits soll die Prozedur des Aufspielens in möglichst einfacher Weise zu bewerkstelligen sein.

### VORTEILE DER ERFINDUNG

Die Erfindung ist mit den Merkmalen des Anspruchs 1 definiert.

Beim erfindungsgemäßen Verfahren zum Überspielen wenigstens eines Datensatzes einer externen Datenquelle in eine Recheneinheit mit den Merkmalen des Anspruches 1 wird der wenigstens eine Datensatz von der externen Datenquelle zusammen mit Zusatzinformationen in einen Zwischenspeicher der Recheneinheit übertragen. Aufgrund der Zusatzinformationen wird eine Überprüfung der Zulässigkeit der Verwendung des wenigstens einen Datensatz vorgenommen. Es wird ein Sperrsignal generiert, wenn die Überprüfung ergibt, dass die Verwendung des wenigstens einen Datensatzes nicht zulässig ist. Der wenigstens eine Datensatzes wird dann vom Zwischenspeicher gelöscht. Ein Freigabesignal wird generiert, wenn die Verwendung des wenigstens einen Datensatzes zulässig ist. Gemäß der Erfindung enthält die Zusatzinformationen eine der Recheneinheit individuell zugeordnete Kennung, wobei die Überprüfung der Gültigkeit in der Recheneinheit erfolgt.

Es wird also an den Datensatz eine Zusatzinformation angefügt, die eine Kennung enthält. In der Recheneinheit wird dann überprüft, ob die Kennung gültig ist, also entsprechenden Überprüfungskriterien entspricht. Ist dies der Fall, so wird das Freigabesignal generiert, andernfalls wird das Sperrsignal erzeugt. Dabei ist die Kennung der Recheneinheit individuell zugeordnet, eine für eine Recheneinheit gültige Kennung ist also bei allen anderen Recheneinheiten, auch denen der gleichen Bauserie, ungültig. Somit kann das Überspielen von Datensätzen für jede einzelne Recheneinheit individuell vorgenommen werden, Datensätze können nicht von einer Recheneinheit auf eine baugleiche andere Recheneinheit kopiert werden. Bei der Kennung handelt es sich dabei vorzugsweise um ein in einem Kennwortgenerator erzeugtes Datenwort, wobei der Kennwortgenerator insbesondere ein Zufallsgenerator ist. Das im Kennwortgenerator erzeugte Datenwort ist dabei beispielsweise eine Zeichenfolge oder eine Folge von Zahlen, wie eine Folge von Hexadezimalzahlen.

Diese Vorgehensweise hat den Vorteil, dass die Überprüfung der Gültigkeit in der Recheneinheit selbst erfolgt und bei der Überprüfung keine manipulierbare Datenkommunikation mit anderen, externen Einrichtungen erforderlich ist. Darüber hinaus kann mit der Kennung in der Recheneinheit laufend überprüft werden, ob die verwendete Version gültig ist oder nicht. Auch ist zum Zeitpunkt des Überspielens des wenigstens einen Datensatzes zusammen mit den Zusatzinformationen auf die Recheneinheit keine weitere Beteiligung von Kommunikationseinrichtungen erforderlich. Auch dann, wenn eine Datenfernübertragung vom Fahrzeug aus, beispielsweise temporär, nicht möglich ist, kann ein Update erfolgen und der wenigstens eine Datensatz, Gültigkeit vorausgesetzt, übernommen werden.

Gemäß der Erfindung nach Anspruch 1 ist eine Kennung nur einmal zum Überprüfen von in dem Zwischenspeicher abgelegten, wenigstens einem übermittelten Datensatzes gültig. Diese Maßnahme verhindert, dass die Kennung bei einem Übermitteln abgehört oder abgefangen wird und dann zum Überspielen anderer, nicht autorisierter Datensätze verwendet wird.

Gemäß der Erfindung nach Anspruch 1 wird dann, wenn das Freigabesignal erzeugt wurde, der wenigstens eine Datensatz von dem Zwischenspeicher in einen Funktionsspeicher, aus dem er zu Verarbeitungszwecken auslesbar ist, übertragen. Diese Maßnahme stellt in vorteilhafter Weise sicher, dass der Datensatz erst zu einem Zeitpunkt in den Funktionsspeicher übergeben wird, zu dem seine Gültigkeit bereits positiv überprüft wurde. Somit ist, bis zum Überspielen eines anderen, als gültig erkannten Datensatzes immer der letzte Version des Datensatzes, der als gültig erkannt wurde im Funktionsspeicher abgespeichert und dort zur Verwendung auslesbar. Durch Versuche des Aufspielens ungültiger Datensätze wird der im Funktionsspeicher abgespeicherte Datensatz nicht beeinträchtigt. Somit ist die Verfügbarkeit der Recheneinheit immer sichergestellt.

In der Ausgestaltung der erfindungsgemäßen Verfahrens nach Anspruch 1 ist in einem Kennwortspeicher der Recheneinheit eine Liste von Kennworten abgelegt. Die zusammen mit dem wenigstens einen Datensatz übermittelte Kennung wird mit dem Kennwort verglichen. Es wird auf Gültigkeit geschlossen wird, wenn die Kennung der zusammen mit dem wenigstens einen Datensatz übermittelten Zusatzinformationen mit dem Kennwort übereinstimmt bzw. die Kombination von Kennung und Kennwort zu überprüfenden Kriterium genügen. So können beispielsweise Kennung und Kennwort zwei Schlüsselteile eines Codes sein, wobei die Kombination von Kennwort und Kennung zusammen ein Ver- und/oder Entschlüsseln einer kodierten Datensequenz ermöglicht und so das Zusammenpassen von Kennwort und Kennung überprüfbar ist. Dabei ist in weiterführender Ausgestaltung in der Recheneinheit ein Zähler ausgebildet, dessen Zählerstand abgespeichert ist. Der Zählerstand verweist auf ein Kennwort des Kennwortspeichers. Vor jeder Überprüfung einer Kennung von wenigstens einem im Zwischenspeicher abgelegten Datensatz wird der Zähler inkrementiert, so dass hierdurch ein Kennwort nur einmal zur Überprüfung neu aufgespielter Datensätze verwendet werden kann.

Dabei ist es wichtig, dass die Liste der Kennworte nicht auslesbar oder beschreibbar ist. Hierzu ist vorzusehen, dass in der Recheneinheit keine Protokollbefehle enthalten sind, die das Auslesen oder Beschreiben des Speicherbereichs mit den Nummern über externe Schnittstellen erlauben. Ergänzend oder alternativ kann es vorgesehen sein, die Recheneinheit durch Vergießen gegen einen Zugang über Hardware-Pins zu schützen. Der Zählerstand muss fest gespeichert werden und auch ohne Stromversorgung erhalten bleiben. Hierzu kann der Zählerstand insbesondere auf einem EEPROM abgelegt werden.

Eine vorteilhafte Ausgestaltung der Erfindung sieht dabei vor, dass eine Signatur Bestandteil der Zusatzinformationen ist, wobei die Signatur auch die verwendete Kennung mit einbeziehen kann, um zu verhindern, dass ein Austausch des wenigstens einen, gültigen Datensatzes, der Zusammen mit einer Zusatzinformation übertragen werden soll gegen einen anderen, insbesondere nicht gültigen Datensatz erfolgt.

Die Überprüfung der Integrität und der Zugehörigkeit der Signatur ist dann insbesondere auch Bestandteil der Überprüfung der Gültigkeit der übermittelten Daten.

Gemäß bevorzugter Ausgestaltung der Liste von Kennworten sollte sie einen möglichst geringes Speichervolumen in der Recheneinheit in Anspruch nehmen, andererseits ist die Länge des Kennwortes so zu wählen, dass es nicht durch Erraten oder Ausprobieren herausgefunden werden kann. Eine Kennwortlänge von z.B. 32 Bit, also 4 Byte oder 2 Hexadezimalzahlen dürfte hierzu ein möglicher Kompromiss zwischen Sicherheit und Speichervolumen darstellen. Der dann für eine Kennwortliste von 256 Kennworten erforderliche Speicherbedarf liegt bei einem KByte. Da Speichervolumina im Bereich von 1 MByte und darüber auch in Steuergeräten von Fahrzeugen verfügbar sind, ist ein Volumen von 1 KByte ein relativ geringes Volumen. Auch sollte in vorteilhafter Ausgestaltung die Anzahl der Kennworte in der Liste möglichst gering gewählt werden, jedoch an den Bedarf von Überspielungen von Datensätzen auf die Recheneinheit während ihrer Lebensdauer angepasst sein. Ein zyklisches Durchlaufen der Liste von Kennworten kann zwar auch möglich sein, durch die mehrfache Verwendung der Kennworte können diese aber durch Dritte herausgefunden werden, so dass dies ein gewisses Aufweichen der Sicherheit zur Folge hat.

Als Schutz gegen Herausfinden der erforderlichen zu überspielenden Kennung kann es vorgesehen sein, dass bei jedem Überspielversuch wenigstens eines Datensatzes eine neue Kennung erforderlich ist. Andererseits ist zu beachten, dass Datenübertragungen auch gestört werden können und es daher unter Umständen mehrer Übertragungsversuche bedarf, bis der wenigstens eine Datensatz und die Zusatzinformationen in den Zwischenspeicher übertragen sind. Damit nicht bei jedem Übertragungsversuch eine neue Kennung in die Zusatzinformationen eingebracht werden muss und zugleich eine große Anzahl von Kennworten verbraucht wird, kann es vorgesehen sein, dass die Überprüfung der Kennung erst stattfindet, wenn die Vollständigkeit und Richtigkeit der Übertragung der Daten in den Zwischenspeicher festgestellt wurde. Hierzu kann insbesondere ein Vergleich der in dem Zwischenspeicher abgelegten Daten oder einer daraus abgeleiteten Signatur mit den Daten der Datenquelle erfolgen. Auch kann eine Bestätigung des Bedieners abgefragt werden, der die Übertragung als in Ordnung quittieren muss, bevor die Überprüfung der Kennung durchgeführt wird. Dadurch dass dann bei jeder Überprüfung der Kennung in der Recheneinheit ein anderes Kennwort verwendet und damit auch verbraucht wird, ist ein Herausfinden der erforderlichen Kennung durch systematisches Versuchen unmöglich.

Ergänzend oder alternativ hierzu ist es auch möglich vorzusehen, dass nach einer definierten Anzahl von Fehlversuchen gleich mehrere aufeinanderfolgenden Kennungen als Zusatzinformation mitübertragen werden müssen und auf Gültigkeit überprüft werden. Es ist auch denkbar ein Verzögerungsglied vorzusehen, das die für einen einzelnen Versuch erforderliche Zeit so erhöht, dass nicht alle Möglichkeiten in einer absehbaren Zeit ausprobiert werden können.

Gemäß bevorzugter Ausgestaltung eines erfindungsgemäßen Verfahrens ist die Recheneinheit über eine Identifikationssequenz identifizierbar. Die Identifikationssequenz ist vorzugsweise auch Teil der Zusatzinformationen und kann bei der Überprüfung der Gültigkeit des wenigstens einen Datensatzes verwendet wird. Durch das Einbinden der Identifikationssequenz in die Zusatzinformationen wird überprüfbar, ob der wenigstens eine Datensatz auch zur Einbringung in der Recheneinheit bestimmt ist. Die Identifikationssequenz ist insbesondere eine in der Recheneinheit auslesbar aber nicht überschreibbare Zeichensequenz, die der Recheneinheit individuell zugeordnet ist und die nur einmal vergeben ist und somit die Recheneinheit von allen anderen baugleichen Recheneinheiten unterscheidet.

Zur Durchführung erfindungsgemäßer Verfahren ist es gemäß vorteilhafter Ausgestaltung vorgesehen, dass für wenigstens ein Steuergerät, vorzugsweise aber für eine Vielzahl von Steuergeräten in einem Kennungsserver der entsprechenden Recheneinheit, beispielsweise über die Identifikationssequenz, zugeordnet gültige Kennungen vorzugsweise in Form einer Liste abgespeichert sind. Hierbei ist vorzugsweise zusammen mit den Kennungen der Zählerstand des Zählers der Recheneinheit abgespeichert, so dass dem Kennwortserver immer die nächste zu verwendende Kennung bekannt ist und diese beispielsweise auf Anfrage einem Berechtigten übermittelt werden kann. Dabei ist es sowohl möglich, dass der Berechtigte die erforderliche Kennung beim Kennungsserver abfragt und dann die Verbindung der Kennung mit den anderen Zusatzinformationen sowie dem wenigstens einen Datensatz vornimmt, als auch, dass der Berechtigte die von diesem benötigten Daten an den Kennungsserver übermittelt und dann im Kennungsserver insbesondere auch unter Verwendung weiterer Sicherungsmaßnahmen wie Verschlüsselungen und Beifügen von Signaturen den wenigstens einen Datensatz und die Zusatzinformationen aufbereitet. Ein in den Zwischenspeicher zu übermittelnder Gesamtdatensatz wird erzeugt und dann an den Berechtigten zum Einspielen in die Recheneinheit oder direkt in die Recheneinheit übermittelt. Bei letzterer Möglichkeit kann im Kennungsserver überprüft werden, ob das Aufspielen des wenigstens einen Datensatzes auf die Recheneinheit zulässig ist, bevor die Kennung den Zusatzinformationen beigefügt wird.

Wird die Kennung an die Datenquelle übermittelt kann nur überprüft werden, ob diese zum Erzeugen und/oder Überspielen zulässiger Datensätze befugt ist. Durch die erforderliche Anfrage beim Kennungsserver zum Erfragen der erforderlichen Kennung ist es möglich im Kennungsserver eine Historie der Zugriffe mitzuprotokollieren. Es wird dann möglich die Zugriffe zurückzuverfolgen. Hierdurch kann, beispielsweise in Fällen des Missbrauchs von herausgegebenen Kennungen, die Quelle des Missbrauchs festgestellt werden.

Eine Recheneinheit gemäß der Erfindung nach Anspruch 7 weist einen Zwischenspeicher und einen überschreibbaren Funktionsspeicher, die beide zum Ablegen von wenigstens einem Datensatz dienen, auf. Auf den Funktionsspeicher wird während der Funktion der Recheneinheit zugegriffen. Über eine Schnittstelle kann wenigstens ein Datensatz zusammen mit Zusatzinformation in den Zwischenspeicher übermittelt werden. In der Recheneinheit ist eine Überprüfungseinheit zum Überprüfen der Gültigkeit des wenigstens einen Datensatzes anhand einer in den Zusatzinformationen enthaltenden Kennung nach einem der vorstehenden Verfahren enthalten. Gemäß bevorzugter Ausgestaltung der Erfindung weist die Recheneinheit einen nur auslesbaren Kennwortspeicher auf. In dem Kennwortspeicher sind Kennworte abgelegt. Dabei ist dem Kennwortspeicher vorzugsweise ein Zähler mit inkrementierbarem Zählerstand zugeordnet. Der Zähler verweist vorzugsweise auf ein Kennwort innerhalb einer Liste insbesondere nur einmalig verwendbarer Kennworte des Kennwortspeichers. Die Recheneinheit ist insbesondere über eine Identifikationssequenz individualisiert. Bei einer erfindungsgemäßen Recheneinheit handelt es sich vorzugsweise um ein Steuergeräte für ein Kraftfahrzeug.

### ZEICHNUNG

Weitere vorteilhafte Ausführungsformen der Erfindung können neben den Ansprüchen auch der Beschreibung entnommen werden. Im übrigen ist die Erfindung nach folgend an Hand des in der Zeichnung dargestellten Ausführungsbeispiels näher erläutert; dabei zeigt:
- Figur 1:: in schematischer Darstellung ein Blockdiagramm von Kennungsserver, Datenquelle und Recheneinheit; und
- Figur 2:: das Flussdiagramm eines erfindungsgemäßen Verfahrens.

### BESCHREIBUNG DES AUSFÜHRUNGSBEISPIELS

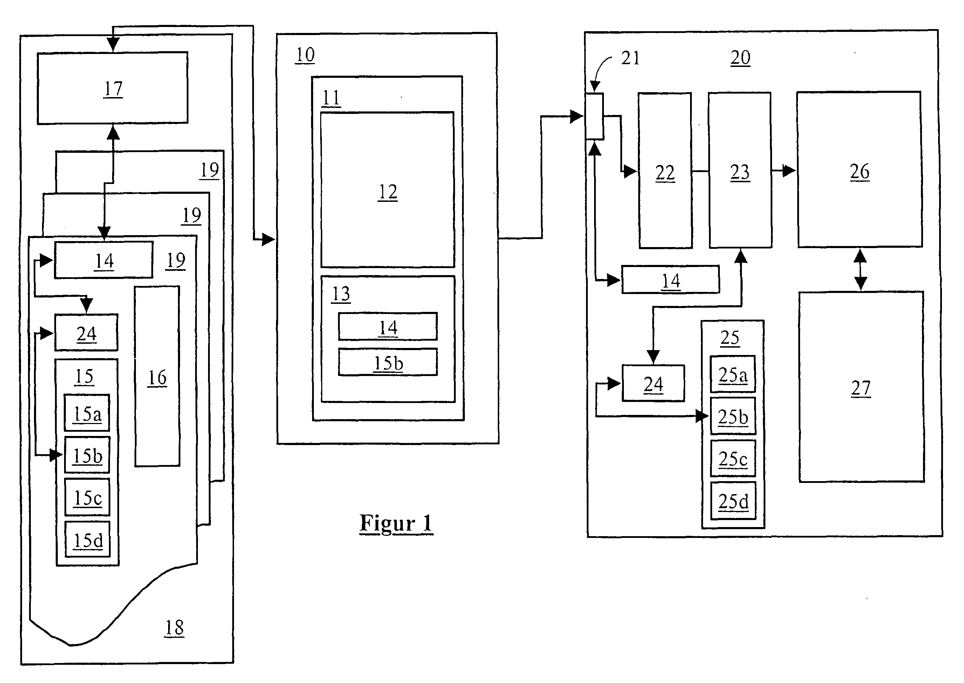

Die Figur 1 zeigt in schematischer Darstellung die bei der Durchführung eines erfindungsgemäßen Verfahrens mitwirkenden Funktionselemente. Es soll wenigstens ein Datensatz 12 von der Datenquelle 10 auf die Recheneinheit 20 übertragen werden. Bei der Datenquelle 10 handelt es sich beispielsweise um eine Datenverarbeitungseinrichtung, die in einer Werkstatt bereitgestellt ist, während es sich bei der Recheneinheit 20 um ein Steuergerät eines Kraftfahrzeugs handeln kann. Daneben ist noch ein Kennungsserver 18 erforderlich, der beispielsweise zentral vom Fahrzeughersteller bereitgestellt und verwaltet wird und der damit eine gute und sichere Zugangskontrolle zu den Kennworten gewährleistet.

Die Recheneinheit 20 weist zum Überspielen von Daten eine Schnittstelle 21 auf. Zum Speichern der an der Schnittstelle 21 eingehenden Daten dient der Zwischenspeicher 22. Die Gültigkeit der in der Schnittstelle gespeicherten Daten wird in der Überprüfungseinheit 23 überprüft, wobei die Überprüfungseinheit hierzu über den Zähler 24 auf ein Element der Liste von Kennworten 25a, 25b, 25c, 25d des Kennwortspeichers 25 zugreift. Wenn die Daten als gültig erkannt werden, so können sie gesteuert durch die Überprüfungseinheit aus dem Zwischenspeicher 22 in den Funktionsspeicher 26 überführt werden. Ein zentraler Rechner 27 der Recheneinheit , eine CPU, greift auf den Funktionsspeicher 26 zurück um Aufgaben abzuarbeiten. Dabei können in dem Funktionsspeicher 26 sowohl auf der CPU 27 abarbeitbare Programme in entsprechender Codierung als auch während der Abarbeitung eines Programms erforderliche Informationen, wie Parameterwerte, Kennfelder und dergleichen abgelegt sein. Daher können sowohl Programme als auch bei der Abarbeitung von Programmen verwendete Informationen mittels eines erfindungsgemäßen Verfahrens auf die Recheneinheit 20 aufgespielt werden. Die Recheneinheit ist durch die auslesbar abgelegte Identifikationssequenz 14 identifizierbar individualisiert.

Die Datenquelle 10 stellt einen Gesamtdatensatz 11 bereit, der auf die Recheneinheit 20 überspielt werden soll. Bei der Datenquelle 10 kann es sich sowohl um Datenverarbeitungseinrichtungen, Werkstattgeräte als auch um Datenträger, insbesondere nur auslesbare Datenträger handeln. Der Gesamtdatensatz 11 gliedert sich in den wenigstens einen Datensatz 12, der in den Funktionsspeicher 26 eingebracht werden soll und der den Programmcode und/oder die während der Abarbeitung eines Programms erforderlichen Informationen enthält und die Zusatzinformationen 13. Die Zusatzinformationen beinhalten wenigstens eine Kennung 15b, zusätzlich können auch weitere Informationen, wie eine Identifikationssequenz 14 enthalten.

In dem Kennungsserver 18 ist zu einer Vielzahl von Recheneinheiten 20 jeweils ein Kennungsdatensatz 19 abgelegt. Der Kennungsdatensatz 19 ist über die Identifikationssequenz 14 jeweils identifizierbar und der Recheneinheit 20 mit der selben Identifikationssequenz 14 zuordenbar. Ein Kennungsdatensatz 19 enthält jeweils einen Zähler 24 dessen Zählerstand bei jedem Abruf eines Elementes aus der Liste von Kennungen 15a, 15b, 15c, 15d des Kennungsspeichers 10 inkrementiert wird. Darüber hinaus ist eine Protokolldatei 16 vorhanden, in der die Herausgabe jeder einzelnen der Kennungen 15a, 15b, 15c, 15d an eine Datenquelle 10 zusammen beispielsweise mit dem Empfänger, dem Übertragungsweg sowie dem Zeitpunkt der Übertragung protokolliert wird. Die Übertragung von Informationen zwischen Kennungsserver 18 und Datenquelle 10 kann durch Datenfernübertragung, wie Funk, Internet oder dergleichen erfolgen. Sowohl die Liste von Kennungen 15a, ..., 15d des Kennwortspeichers 15 als auch die Liste von Kennworten 25a,...,25d des Kennwortspeichers 25 wird beim ersten Bespielen der Recheneinheit 20 mit Daten erzeugt und in den entsprechenden Speichern 15, 25 abgelegt.

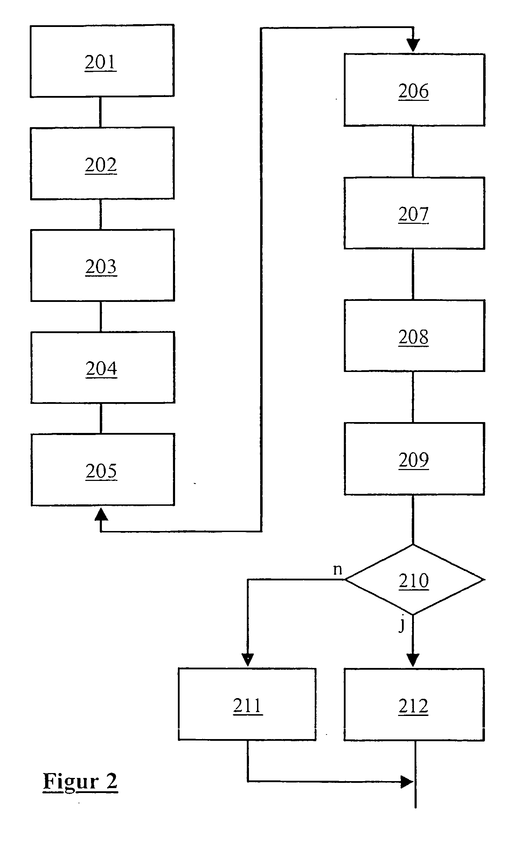

Die Figur 2 zeigt das Flussdiagramm eines Verfahrens zum Übertragen wenigstens eines Datensatzes 12 an die Recheneinheit 20, wie es beispielsweise bei einer Konfiguration von Rechengerät 20, Datenquelle 10 und Kennungsserver 18 gemäß der Figur 1 durchführbar ist. Dabei zeigen die Schritte 201 bis 205 die vor der eigentlichen Übertragung des wenigstens einen Datensatzes 12 durchgeführten Schritte, während die Schritte 206 bis 212 die bei der eigentlichen Datenübertragung durchgeführten Schritte sind.

Gemäß dem Schritt 201 des Verfahrens wird der zumindest eine Datensatz 12, der in die Recheneinheit 20 übertragen werden soll, bereitgestellt. Gemäß dem Schritt 202 wird anschließend die Recheneinheit 20, beispielsweise durch Auslesen der Identifikationssequenz 14 über die Schnittstelle 21 identifiziert. Die Identifikation kann alternativ auch manuell erfolgen, indem die auf der Recheneinheit 20 ablesbar angeordnete Identifikationssequenz 14 abgelesen und manuell oder über ein optisches Lesegerät erfasst wird.

Anschließend wird gemäß dem Schritt 203 die erforderliche Kennung beim Kennungsserver 18 abgefragt. Hierzu wird dem Kennungsserver die zuvor ausgelesene Identifikationssequenz übermittelt. Aufgrund der Identifikationssequenz wird im Identifikationsserver auf den Kennungsdatensatz 19 zugegriffen, der der spezifischen Recheneinheit 20 zugeordnet ist. Dabei ist es auch möglich, dass zu Synchronisationszwecken der Zählerstände auch der aktuelle Zählerstand des Zählers 24 der Recheneinheit übermittelt wird. Es wird überprüft, ob die Kennung an den Anfrager übermittelt werden darf, falls dies nicht der Fall ist, wird der Zugriff verweigert, das Verfahren ist dann beendet. Es kann auch überprüft werden, ob die zur Überspielung beabsichtigten Datensätze 12 freigegeben sind und überspielt werden dürfen. Diese Übermittlung erfolgt somit nur an einen berechtigten, autorisierten und identifizierten Anfrager.

Danach wird, soweit zulässig, gemäß dem Schritt 204 des Verfahrens die nächste gültige Kennung 15b der Kennungsliste 15 ausgegeben. Hierzu wird zunächst der Zähler 24 des Kennungsservers 18 inkrementiert, wobei zuvor ein Angleichen an einen übermittelten Zählerstand erfolgen kann, so dass der Zählerstand auf die nächste Kennung, die noch nicht verwendet wurde verweist. Entsprechend dem dann vorliegenden Zählerstand, im in Figur 1 gezeigten Beispiel ist dies 2, wird eine dem Zählerstand zugeordnete Kennung 15b des Kennungsspeichers 15 ausgelesen und an die Datenquelle übermittelt. Gleichzeitig wird die Protokolldatei 16 entsprechend um die der neuen Abfrage der Kennung zugeordneten Informationen ergänzt.

Anschließend wird gemäß dem Schritt 205 in der Datenquelle 10 das Gesamtdatenpaket 11 erzeugt. Das Gesamtdatenpaket besteht aus dem mindestens einen Datensatz 12, und den zugeordneten Zusatzinformationen 13, die im in Figur 1 dargestellten Ausführungsbeispiel aus der vom Kennungsserver 18 übermittelten Kennung 15b und der Identifikationssequenz 14 besteht, wobei die Zusatzinformationen 13 auch weitere Daten enthalten kann. Mit Abschluss des Schrittes 205 steht also ein Gesamtdatenpaket 11 bereit, das an die Recheneinheit 20 übermittelbar ist.

Von diesen Vorbereitungsschritten zeitlich und räumlich getrennt kann das eigentliche Aufspielen des wenigstens einen Datensatzes 12 auf die Recheneinheit 20 erfolgen. Hierzu wird gemäß dem Schritt 206 zunächst das Gesamtdatenpaket 11 über die Schnittstelle 21 auf den Zwischenspeicher 22 übertragen. Durch den Abschluss des Übertragens, und ggf. nach einer Bestätigung des erfolgreichen Abschlusses des Übertragungsvorgangs, der beispielsweise auch von einem Bediener erzeugt werden kann, wird die Überprüfung der übertragenen Daten auf Gültigkeit durch die Überprüfungseinheit 23 gestartet.

Hierzu greift gemäß dem Schritt 207 die Überprüfungseinheit 23 zunächst auf den Zähler 24 zu, dessen Zählerstand bei diesem Zugriff entsprechend inkrementiert wird. Aufgrund des Zählerstandes wird gemäß dem Schritt 208 auf ein Kennwort 25a, 25b, 25c, 25d der Kennwortliste 25 verwiesen, im in der Figur 1 gezeichneten Fall beim Zählerstand 2 auf das Kennwort 25b. Dieses wird dann an die Überprüfungseinheit 23 zurückübermittelt.

Gemäß dem Schritt 209 wird nun anhand des Kennwortes 25b und der Kennung 15b überprüft, ob der wenigstens eine Datensatz 12 gültig ist und in der Recheneinheit abgespeichert werden darf. Die Überprüfung kann insbesondere in einem Vergleich auf Übereinstimmung zwischen Kennwort 25b und Kennung 15b bestehen. Wird gemäß dem Schritt 210 festgestellt, dass die Gültigkeit nicht vorliegt, so wird das Sperrsignal erzeugt und zum Schritt 211 gesprungen. Gemäß dem Schritt 211 werden dann die im Zwischenspeicher 22 gespeicherten Daten gelöscht und das Verfahren wird ohne Übernehmen des wenigstens einen Datensatzes 12 in den Funktionsspeicher 26 beendet. Eine Verwendung des übermittelten wenigstens einen Datensatzes 12 in dem zentralen Rechner (CPU) 27 der Recheneinheit 20 ist damit ausgeschlossen. Das Übertragungsverfahren ist somit erfolglos beendet.

Bei Erkennen der Gültigkeit im Schritt 210 wird das Freigabesignal erzeugt und zum Schritt 212 gesprungen und zumindest der wenigstens eine Datensatz vom Zwischenspeicher 22 zu dem Funktionsspeicher 26 übertragen. Der zentrale Rechner 27 der Recheneinheit 20 greift bei seiner Arbeit auf den Funktionsspeicher 26 zu und berücksichtigt dabei die in dem Funktionsspeicher 26 abgespeicherten Daten, bei denen es sich sowohl um Programmcode für den zentralen Rechner 27 als auch um bei der Durchführung eines Programms abgefragten Informationen wie Kennfelder und Steuerungsparameter handeln kann. Während dieses Übertragungsvorgangs können im Funktionsspeicher enthaltene Daten, die ersetzt werden sollen überschrieben werden. Hierzu kann es sich bei dem Funktionsspeicher 27 insbesondere um einen sogenannten Flash-Speicher handeln, der durch flashen mit neuen Daten versorgt werden kann. Das Übertragungsverfahren ist damit dann beendet.

## Patentansprüche

1. Verfahren zum Überspielen wenigstens eines Datensatzes (12) einer externen Datenquelle (10) in eine Recheneinheit (20), wobei der wenigstens eine Datensatz (12) von der externen Datenquelle (10) zusammen mit Zusatzinformationen in einen Zwischenspeicher (22) der Recheneinheit (20) übertragen werden, wobei aufgrund der Zusatzinformationen eine Überprüfung der Zulässigkeit der Verwendung des wenigstens einen Datensatzes (12) erfolgt, wobei ein Sperrsignal generiert wird, wenn die Überprüfung ergibt, dass die Verwendung nicht zulässig ist und dann ein Löschen des wenigstens einen Datensatzes (12) vom Zwischenspeicher (22) erfolgt, wobei ein Freigabesignal generiert wird, wenn die Verwendung des wenigstens einen Datensatzes (12) zulässig ist, wobei die Zusatzinformationen (13) eine der Recheneinheit (20) individuell zugeordnete Kennung (15a,15b,15c,15d) enthalten, und wobei die Überprüfung der Gültigkeit in der Recheneinheit (20) erfolgt, **dadurch gekennzeichnet, dass** eine Kennung (15a,15b,15c,15d) nur einmal zum Überprüfen eines in dem Zwischenspeicher (22) abgelegten, wenigstens einen übermittelten Datensatzes (12) gültig ist, dass in einem Kennwortspeicher (25) der Recheneinheit (20) eine Liste von Kennworten (25a,25b,25c,25d) abgelegt ist, wobei die Kennung (15a,15b,15c,15d) mit dem Kennwort (25a,25b,25c,25d) verglichen wird und auf Gültigkeit geschlossen wird, wenn Kennwort (25a,25b,25c,25d) und Kennung (15a,15b,15c,15d) zueinander passen, und dass ein Zählerstand eines Zählers (24) abgespeichert ist, wobei der Zähler (24) auf ein Kennwort (25a,25b,25c,25d) des Kennwortspeichers (25) verweist, und wobei vor jeder Überprüfung der Kennung (15a,15b,15c,15d) von wenigstens einem im Zwischenspeicher (22) abgelegten Datensatz (12) der Zählerstand des Zählers (24) inkrementiert wird.

2. Verfahren nach Anspruch 1, **dadurch gekennzeichnet, dass** auf die Gültigkeit geschlossen wird, wenn Kennwort (25a, 25b, 25c, 25d) und Kennung (15a, 15b, 15c, 15d) übereinstimmen.

3. Verfahren nach einem der Ansprüche 1 oder 2, **dadurch gekennzeichnet, dass** dann, wenn das Freigabesignal erzeugt wurde, der wenigstens eine Datensatz (12) von dem Zwischenspeicher (22) in einen Funktionsspeicher (26), aus dem dieser zu Verarbeitungszwecken auslesbar sind, übertragen wird.

4. Verfahren nach einem der vorhergehenden Ansprüche, **dadurch gekennzeichnet, dass** die Recheneinheit (20) über eine Identifikationssequenz (14) identifizierbar ist, wobei die Identifikationssequenz (14) vorzugsweise auch Teil der Zusatzinformationen (13) ist und bei der Überprüfung der Gültigkeit des wenigstens einen Datensatzes (12) verwendet wird.

5. Verfahren nach einem der vorhergehenden Ansprüche, **dadurch gekennzeichnet, dass** in einem Kennungsserver (18) für die Recheneinheit (20) gültige Kennungen (15a,15b,15c,15d) abgespeichert sind.

6. Verfahren nach einem der vorhergehenden Ansprüche, **dadurch gekennzeichnet, dass** in dem Kennwortserver (18) für eine Anzahl von Zählerständen des Zählers (24) Kennungen (15a,15b,15c,15d) abrufbar abgespeichert sind, wobei die Kennungen (15a,15b.15c,15d) insbesondere über eine Identifikationssequenz (14) einer bestimmten Recheneinheit (20) zuordenbar sind.

7. Recheneinheit (20) die Mitteln enthält, die die Schritte des Verfahrens nach einem der vorhergehenden Ansprüche durchführen, **dadurch gekennzeichnet, dass** sie einen Zwischenspeicher (22), einen überschreibbaren Funktionsspeicher (26), auf den während der Funktion der Recheneinheit (20) zugegriffen wird, beide zum Ablegen von wenigstens einem Datensatz (12) ausgebildet, eine Schnittstelle (21) zum Einspielen wenigstens eines Datensatzes (12) zusammen mit Zusatzinformation (13) in den Zwischenspeicher (22), und eine Überprüfungseinheit (23) zum Überprüfen der Gültigkeit des wenigstens einen Datensatzes (12) enthält, wobei die Recheneinheit (20) einen nur auslesbaren Kennwortspeicher (25) aufweist, wobei in dem Kennwortspeicher (25) Kennworte (25a,25b,25c,25d) abgelegt sind und wobei dem Kennwortspeicher (25) ein Zähler (24) mit inkrementierbarem Zählerstand zugeordnet ist, der auf eines der Kennworte (25a,25b,25c,25d) verweist und wobei die Recheneinheit (20) insbesondere über eine Identifikationssequenz (14) individualisiert ist.

8. Recheneinheit nach Anspruch 7, **dadurch gekennzeichnet, dass** die Recheneinheit (20) ein Steuergerät eines Kraftfahrzeuges ist.

## Claims

1. Method for transferring at least one data record (12) from an external data source (10) to a computation unit (20), wherein the at least one data record (12) is transmitted from the external data source (10) together with supplementary information to a buffer store (22) in the computation unit (20), wherein the supplementary information is taken as a basis for checking the admissibility of use of the at least one data record (12), wherein a disabling signal is generated if the result of the check is that use is not admissible, and then the at least one data record (12) is erased from the buffer store (22), wherein an enabling signal is generated if use of the at least one data record (12) is admissible, wherein the supplementary information (13) contains an identifier (15a, 15b, 15c, 15d) individually associated with the computation unit (20), and wherein the validity check takes place in the computation unit (20), **characterized in that** an identifier (15a, 15b, 15c, 15d) is valid only once for checking an at least one transmitted data record (12) stored in the buffer store (22), **in that** a password memory (25) in the computation unit (20) stores a list of passwords (25a, 25b, 25c, 25d), wherein the identifier (15a, 15b, 15c, 15d) is compared with the password (25a, 25b, 25c, 25d) and validity is inferred if the password (25a, 25b, 25c, 25d) and the identifier (15a, 15b, 15c, 15d) go together, and **in that** a counter reading on a counter (24) is stored, wherein the counter (24) refers to a password (25a, 25b, 25c, 25d) in the password memory (25), and wherein every check by the identifier (15a, 15b, 15c, 15d) on at least one data record (12) stored in the buffer store (22) is preceded by the counter reading on the counter (24) being incremented.

2. Method according to Claim 1, **characterized in that** the validity is inferred if the password (25a, 25b, 25c, 25d) and the identifier (15a, 15b, 15c, 15d) match.

3. Method according to one of Claims 1 and 2, **characterized in that** when the enabling signal has been produced the at least one data record (12) is transmitted from the buffer store (22) to a function memory (26), from which it can be read for processing purposes.

4. Method according to one of the preceding claims, **characterized in that** the computation unit (20) can be identified by means of an identification sequence (14), wherein the identification sequence (14) is preferably also part of the supplementary information (13) and is used when the validity of the at least one data record (12) is checked.

5. Method according to one of the preceding claims, **characterized in that** an identifier server (18) stores identifiers (15a, 15b, 15c, 15d) which are valid for the computation unit (20).

6. Method according to one of the preceding claims, **characterized in that** the identifier server (18) stores identifiers (15a, 15b, 15c, 15d) in retrievable form for a number of counter readings on the counter (24), wherein the identifiers (15a, 15b, 15c, 15d) can be assigned to a particular computation unit (20), particularly by means of an identification sequence (14).

7. Computation unit (20) which contains means which perform the steps of the method according to one of the preceding claims, **characterized in that** it contains a buffer store (22), an overwritable function memory (26) which is accessed during the operation of the computation unit (20), both being designed to store at least one data record (12), an interface (21) for loading at least one data record (12) together with supplementary information (13) into the buffer store (22), and a checking unit (23) for checking the validity of the at least one data record (12), wherein the computation unit (20) has a read-only password memory (25), wherein the password memory (25) stores passwords (25a, 25b, 25c, 25d), and wherein the password memory (25) has an associated counter (24) with an incrementable counter reading which refers to one of the passwords (25a, 25b, 25c, 25d), and wherein the computation unit (20) is individualized, particularly by means of an identification sequence (14).

8. Computation unit according to Claim 7, **characterized in that** the computation unit (20) is a controller in a motor vehicle.

## Revendications

1. Procédé pour transférer au moins un jeu de données (12) d'une source externe de données (10) dans une unité de calcul (20),
selon lequel
au moins ce jeu de données (12) est transmis d'une source externe de données (10) avec des informations complémentaires dans une mémoire intermédiaire (22) de l'unité de calcul (20), et
à partir des informations supplémentaires, on vérifie la fiabilité de l'utilisation au moins de ce jeu de données (12),
on génère un signal de blocage si le contrôle montre que l'utilisation n'est pas autorisée et ensuite on efface au moins un jeu de données (12) dans la mémoire intermédiaire (22), et on génère un signal de libération si l'utilisation au moins du jeu de données (12) est autorisée,
les informations complémentaires (13) contiennent une caractéristique (15a, 15b, 15c, 15d) associée individuellement à l'unité de calcul (20), et on contrôle la validité dans l'unité de calcul (20),
**caractérisé en ce que**
une caractéristique (15a, 15b, 15c, 15d) n'est valable qu'une seule fois pour le contrôle d'au moins un jeu de données (12) transmis et enregistré dans la mémoire intermédiaire (22),
une mémoire de mots caractéristiques (25) de l'unité de calcul (20) contient l'enregistrement d'une liste de mots caractéristiques (25a, 25b, 25v, 25d),
on compare la caractéristique (15a, 15b, 15c, 15d) au mot caractéristique (25a, 25b, 25v, 25d), et on conclut à la validité si le mot caractéristique (25a, 25b, 25v, 25d) et la caractéristique (15a, 15b, 15c, 15d) se correspondent, et
on enregistre un état de comptage d'un compteur (24), le compteur (24) se référant un mot caractéristique (25a, 25b, 25c, 25d) de la mémoire de mots caractéristiques (25), et avant chaque contrôle de la caractéristique (15a, 15b, 15c, 15d) d'au moins un jeu de données (12) enregistré dans une mémoire intermédiaire (22), on incrémente l'état de comptage du compteur (24).

2. Procédé selon la revendication 1;
**caractérisé en ce qu'**
on conclut à la validité si le mot caractéristique (25a, 25b, 25c, 25d) et la caractéristique (15a, 15b, 15c, 15d) concordent.

3. Procédé selon la revendication 1 ou 2;
**caractérisé en ce que**
si le signal de libération a été généré, on transfère au moins un jeu de données (12) de la mémoire intermédiaire (22) dans une mémoire de fonction (26) dans laquelle ce jeu de données peut être lu pour être traité.

4. Procédé selon les revendications précédentes,
**caractérisé en ce que**
l'unité de calcul (20) est identifiable par une séquence d'identification (14), la séquence d'identification (14) faisant de préférence également partie des informations complémentaires (13), et elle est utilisée pour contrôler la validité d'au moins un jeu de données (12).

5. Procédé selon les revendications précédentes,
**caractérisé en ce qu'**
un serveur de caractéristiques (18) de l'unité de calcul (20) contient en mémoire les caractéristiques valables (15a, 15b, 15c, 15d).

6. Procédé selon les revendications précédentes,
**caractérisé en ce que**
les caractéristiques (15a, 15b, 15c, 15d), dans le serveur de mots caractéristiques (18) sont enregistrés de façon à pouvoir être appelées et elles correspondent à un certain nombre d'états de comptage du compteur (24), les caractéristiques (15a, 15b, 15c, 15d) étant notamment associées par une séquence d'identification (14) à une certaine unité de calcul (20).

7. Unité de calcul (20) comportant des moyens permettant d'exécuter les étapes du procédé selon les revendications précédentes,
**caractérisée en ce qu'**
elle comporte une mémoire intermédiaire (22), une mémoire de fonction (26) qui peut être surscrite, et à laquelle on peut accéder au cours du fonctionnement de l'unité de calcul (20), les deux pour recevoir au moins un jeu de données (12), une interface (21) pour transférer au moins un jeu de données (12) avec l'information complémentaire (13) dans la mémoire intermédiaire (22), et une unité de contrôle (23) pour contrôler la validité d'au moins un jeu de données (12),
l'unité de calcul (20) comportant une mémoire morte de mots caractéristiques (25) et la mémoire de mots caractéristiques (25) contient l'enregistrement de mots caractéristiques (25a, 25b, 25c, 25d), et un compteur (24) avec un état de comptage incrémentable est associé à la mémoire de mots caractéristiques (25), ce compteur se référant à l'un des mots caractéristiques (25a, 25b, 25c, 25d) et l'unité de calcul (20) est individualisée notamment par l'intermédiaire d'une séquence d'identification (14).

8. Unité de calcul selon la revendication 7,
**caractérisée en ce que**
l'unité de calcul (20) est l'appareil de commande d'un véhicule automobile.
